# EUROPÄISCHE PATENTSCHRIFT

(11) **EP 1 250 368 B1**
(45) Veröffentlichungstag und Bekanntmachung des Hinweises auf die Patenterteilung: **01.03.2006**
(21) Anmeldenummer: 00983252.8
(22) Anmeldetag: 08.12.2000
(51) Int. Cl.: C08G 18/08, C08G 18/32, C08G 18/42, C08G 18/66

(54) **DISPERSIONEN VON POLYURETHANEN**
POLYURETHANE DISPERSIONS
DISPERSIONS DE POLYURETHANES

(30) Priorität: 17.12.1999 DE 19960952
(43) Veröffentlichungstag der Anmeldung: 23.10.2002
(73) Patentinhaber: Cognis Deutschland GmbH & Co. KG, 40789 Monheim (DE)
(72) Erfinder: ZANDER, Lars, 40589 Düsseldorf (DE); NAGORNY, Ulrich, 40721 Hilden (DE); HÖFER, Rainer, 40477 Düsseldorf (DE); SAUF, Silvia, 40472 Düsseldorf (DE)
(86) Internationale Anmeldenummer: PCT/EP2000/012368
(87) Internationale Veröffentlichungsnummer: WO 2001/044335

(56) Entgegenhaltungen:
- EP-A- 0 669 352
- EP-A- 0 735 068
- WO-A-93/24551
- US-A- 4 423 179

## Beschreibung

### Gebiet der Erfindung

Die Erfindung betrifft wäßrige Dispersionen von speziellen Polyurethanen mit einem Gehalt an Hydroxylgruppen und an Urethangruppen.

### Stand der Technik

Polyurethane (PUR) sind eine umfangreiche Gruppe von Polymeren sehr unterschiedlicher Zusammensetzung mit vielfältigem Eigenschaftsbild. Allen Polyurethanen gemeinsam ist das Aufbauprinzip, daß sie nach dem Diisocyanat-Polyadditionsverfahren hergestellt werden. Charakteristisch für diese Verbindungen sind Urethangruppen -NH-CO-O-, die durch Polyaddition von HydroxyVerbindungen, meist Diolen oder Polyolen, an die -NCO-Gruppen von di- bzw. polyfunktionellen Isocyanaten entstehen. In den meisten Fällen verknüpft die Urethangruppe Polyalkylenether- und/oder Polyestersequenzen, die ihrerseits Molekularmassen zwischen etwa 200 und 6000 aufweisen. Polyurethane sind im Handel zum Beispiel als Schaumstoffe, thermoplastische Granulate, Lösungen, wäßrige Dispersionen und in Form von Prepolymeren erhältlich.

Aus Polyurethanen werden beispielsweise herstellt: Hochelastische Schaumstoffe (Matratzen, Polster, Autositze), Hartschaumstoffe (Isoliermaterialien), harte und flexible Formteile mit kompakter Außenhaut (Fensterrahmen, Gehäuse, Skier, Autostoßfänger, Front- und Heckteile, Lenkräder, Schuhsohlen) technische Formteile hoher Elastizität und Härte, Skischuhe, Folien, Blasformteile, Autostoßfänger, Druckwalzen, Lacke, Klebstoffe, Textilbeschichtungen, Hochglanz-Papierbeschichtungen, Lederfinisches, Elastomerfäden, Wollausrüstungsmittel usw. Zahl und Umfang der Anwendungsgebiete wachsen ständig. Über Herstellung, Eigenschaften, Technologie und Anwendung von Polyurethanen liegen zahlreiche Monographien und Übersichtsartikel vor. Beispielhaft sei hier verwiesen auf: **Gerhard W. Becker (Herausgeber) "Kunststoff-Handbuch - 7. Polyurethane" 3. Auflage 1993, Seiten 455-467 sowie 508 und 510-512.**

**EP-B-533 730** (Henkel) beschreibt Beschichtungsmittel für flexible Substrate enthaltend wäßrige Polyurethandispersionen, deren Polyurethane aufgebaut sind aus einer zumindest überwiegend aus Polycaprolactondiolen bestehenden Polyolmischung einer Isocyanatmischung mit einer mittleren NCO-Funktionalität über 1,5 sowie aus in wäßriger Lösung zur Salzbildung befähigten funktionellen Komponenten und gewünschtenfalls Kettenverlängerungsmitteln. Dimerdiol und Dimerdiolcarbonat sind jedoch keine Bausteine zur Herstellung des Polyurethans.

**EP-B-590 480** (BASF) beschreibt Polyurethan-Beschichtungszusammensetzungen enthaltend ein wäßriges Medium, ein spezielles wasserdispergierbares Polyurethanharz mit einer Hydroxylzahl von mindestens 5 und einem Aminoplast-Vemetzer. Als Bausteine zur Herstellung des Polyurethanharzes wird Dimerdiol eingesetzt, nicht jedoch Dimerdiolcarbonat.

**DE-A-42 37 96**5 (Henkel) beschreibt spezielle Polyurethan-Dispersionen und deren Verwendung als Bindemittel in Einbrennlacken. Als Baustein zur Herstellung des Polyurethanharzes wird u.a. Dimerdiol eingesetzt, nicht jedoch Dimerdiolcarbonat.

**DE-A-43 16 245** (Henkel) beschreibt spezielle Polyalkylenglykole und deren Verwendung u.a. für Dichtstoffe und Beschichtungsmassen.

**DE-A-195 12 310** (Parker-Prädifa) beschreibt thermoplastische Polyurethane und deren Verwendung zur Herstellung von Dichtungen. Als Bausteine zur Herstellung der Polyurethane werden u.a. Dimerdiol und Dimerdiolcarbonat eingesetzt, nicht jedoch Säurekomponenten wie Dimethylolpropionsäure.

**DE-A-195 13 164** (Bayer) beschreibt Polycarbonat-Diole und deren Verwendung als Ausgangsprodukte für Polyurethan-Kunststoffe.

**DE-A-195 25 406** (Henkel) beschreibt Herstellung und Verwendung von Oligocarbonaten aus Dimerdiol.

**EP-B-669 352** (Bayer) beschreibt spezielle wäßrige Polyester-Polyurethan-Dispersionen und deren Verwendung in Beschichtungsmitteln. Die Dispersionen enthalten solche Polyurethane, bei deren Herstellung als Baustein zwingend mindestens ein lineares Polyesterpolyol eingesetzt werden muß. Gemäß Seite 4, Zeilen 3ff der EP-B-669 352 erfolgt die Herstellung der Polyesterpolyole durch Polykondensation mindestens zweier spezieller Komponenten, wobei bei der einen Komponente Adipinsäure, bei der zweiten Dimerdiol zu den bevorzugten Verbindungen gehört.

### Beschreibung der Erfindung

Aufgabe der vorliegenden Erfindung war es, wäßrige Bindemittel zur Verfügung zu stellen, die für hochelastische Lacke, Beschichtungen und Dichtmassen geeignet sind, eine gute Filmmechanik und Haftung aufweisen, sich ferner durch eine gute Lösemittelbestandigkeit auszeichnen und darüber hinaus auch möglichst wenige flüchtige organische Substanzen enthalten um auch hohen Anforderungen bezüglich der Umweltverträglichkeit gerecht werden zu können.

Gegenstand der Erfindung sind zunächst **wäßrige Dispersionen von Polyurethanen** mit einer Säurezahl von 5 bis 60 mg KOH/g Polyurethan-Feststoff, einem Gehalt an Hydroxylgruppen von 0,25 bis 6,5 Gew.-% und an Urethangruppen (berechnet als -NH-CO-O-) von 2 bis 25 Gew.-%, jeweils bezogen auf Polyurethan-Feststoff, dadurch gekennzeichnet, daß die Polyurethane gegebenenfalls zumindest teilweise mit Basen neutralisierte, Umsetzungsprodukte darstellen von
a) 10 bis 80 Gew.-% mindestens eines Dimerdiols,
b) 10 bis 80 Gew.-% mindestens eines Dimerdiolcarbonats und/oder Dimerdiolethers,
c) 1 bis 10 Gew.-% mindestens einer Säurekomponente bestehend aus i) Hydroxycarbonsäuren, ii) Aminocarbonsäuren, iii) Aminosulfonsäuren und iv) Hydroxysulfonsäuren,
d) 0 bis 20 Gew.-% einer niedermolekularen Komponente, bestehend aus mindestens zwei Hydroxyl- und/oder Aminogruppen enthaltenden Verbindungen des Molekulargesichtsbereichs 60 bis 300,
e) 0 bis 20 Gew.-% mindestens eines hydrophilen, Ethylenoxideinheiten aufweisenden ein- oder mehrwertigen Alkohols des Molekulargewichtsbereichs 350 bis 3.000,
f) 5 bis 40 Gew.-% einer Isocyanatkomponente

wobei sich die genannten Prozentangaben zu 100 ergänzen.

Ausdrücklich sei festgestellt, daß Polyesterpolyole wie sie in der eingangs erwähnten EP-B-669 352 beschrieben sind (vergleiche dort Seite 2, Zeile 34 und Seite 4, Zeilen 3 bis 22) als Bausteine für die Polyurethane gemäß der vorliegenden Erfindung ausgeschlossen sind.

Ein weiterer Gegenstand der Erfindung ist die Verwendung der genannten Dispersionen zur Herstellung wäßriger Beschichtungsmittel auf Basis von in Wasser dispergierten Bindemitteln und Vernetzerharzen. Dabei wählt man die Vernetzerharze aus der Gruppe bestehend aus Aminoplastharzen, gegebenenfalls hydrophil modifizierten blockierten Isocyanaten und gegebenenfalls hydrophil modifizierten Isocyanaten mit freien Isocyanatgruppen.

Ein weiterer Gegenstand der Erfindung sind **wäßrige Beschichtungsmittel,** welche als Bindemittel eine Kombination aus
A) einer Polyolkomponente mit
B) einem Vernetzerharz, ausgewählt aus der Gruppe bestehend aus Melaminharzen, gegebenenfalls hydrophil modifizierten blockierten Isocyanaten und gegebenenfalls hydrophil modifizierten Isocyanaten mit freien Isocyanatgruppen enthalten, wobei die Komponente A) zu 25 bis 100 Gew.-% aus einem Hydroxylgruppen enthaltenden Polyurethan der erfindungsgemäß dispergiert vorliegenden Art und zu 0 bis 75 Gew.-% aus anderen, von diesen Polyurethanen verschiedenen Bindemitteln besteht. Dabei kann das Beschichtungsmittel gewünschtenfalls zusätzlich die üblichen Hilfs- und Zusatzstoffe enthalten.

Die erfindungsgemäßen Polyurethan-Dispersionen weisen im allgemeinen Festkörpergehalte von 15 bis 68, vorzugsweise 33 bis 60 Gew.-%, und bei 23°C rotationsviskosimetrisch bestimmte Viskositäten von 10 bis 20.000, vorzugsweise 50 bis 5.000 mPas auf. Der pH-Wert wird auf Werte zwischen 5 und 10, vorzugsweise 6 bis 8 eingestellt und wird gemäß DIN 53 785 nach Verdünnen mit destilliertem Wasser auf einen Feststoffgehalt von 10 Gew.-% bestimmt. Der Begriff "Dispersion" soll im übrigen im Rahmen der Erfindung sowohl echte wäßrige Dispersionen als auch wäßrige Lösungen umfassen. Die Frage, ob es sich um Dispersionen oder Lösungen handelt, ist insbesondere vom Gehalt an salzartigen Gruppen und vom Molekulargewicht der Polymeren abhängig.

Die in den Dispersionen als disperse Phase vorliegenden Polyurethane weisen, bezogen auf Feststoff, einen Gehalt an Urethangruppen (-NH-CO-O) von 2 bis 25, vorzugsweise 4 bis 19 Gew.-%, eine Säurezahl von 5 bis 60 mg KOH/g, vorzugsweise von 8 bis 40 mg KOH/g, wobei sich die Säurezahl sowohl auf freie Säuregruppen, als auch auf mit Basen neutralisierte Säuregruppen des Feststoffs bezieht, und einen Gehalt an Hydroxylgruppen von 0,25 bis 6,5, vorzugsweise 0,5 bis 3,5 Gew.-% auf. Die Wasserverdünnbarkeit der Polyurethane ist im wesentlichen auf ihren Gehalt an den genannten anionischen Gruppen zurückzuführen.

Die **Herstellung der Dispersionen** erfolgt durch Umsetzung von
- 10 bis 80, vorzugsweise 20 bis 70 Gew.-% der Ausgangskomponente a),
- 10 bis 80, vorzugsweise 10 bis 60 Gew.-% der Ausgangskomponente b),
- 1 bis 10, vorzugsweise 2 bis 7 Gew.-% der Ausgangskomponente c),
- 0 bis 20, vorzugsweise 0,5 bis 20 Gew.-% der Ausgangskomponente d),
- 0 bis 20, vorzugsweise 0 bis 10 Gew.-% der Ausgangskomponente e)
- mit 5 bis 40, vorzugsweise 7 bis 30 Gew.-% der Ausgangskomponente f),

wobei sich die zu a) bis f) gemachten Prozentangaben zu 100 % ergänzen, in 40- bis 100-, vorzugweise 85- bis 100-%iger, organischer Lösung (100%ig = lösungsmittelfrei), wobei die Komponenten a) bis e) gegebenenfalls mit Lösemittel vorgelegt und in Gegenwart von 0 bis 2,5, vorzugsweise 0,01 bis 0,5 Gew.-% geeigneter Katalysatoren bei 40 bis 160 °C mit Komponente f) derart zur Reaktion gebracht werden, daß nach der Umsetzung praktisch keine freien NCO-Gruppen mehr nachweisbar sind.

Bei dieser Umsetzung wird im allgemeinen unter Einhaltung eines Äquivalentverhältnisses von gegenüber Isocyanatgruppen reaktionsfähigen Gruppen zu Isocyanatgruppen von 1,1:1 bis 2,5:1, vorzugsweise 1,2:1 bis 1,5:1 gearbeitet, so daß letztendlich Umsetzungsprodukte mit dem obengenannten Hydroxylgruppengehalt resultieren. Gegebenenfalls im Reaktionsgemisch vorliegende zur Überführung in anionische Gruppen bestimmte Carboxylgruppen sind hierbei nicht als "gegenüber Isocyanatgruppen reaktionsfähig" anzusehen.

Im Anschluß an die genannte Umsetzung wird das Reaktionsgemisch in Wasser dispergiert bzw. gelöst, wobei gegebenenfalls in das Reaktionsgemisch eingeführte Säuregruppen während der Umsetzung oder vor bzw. während des Disperschrittes durch Zugabe eines Neutralisationsmittels zu 25 bis 100, vorzugsweise zu 45 bis 100 % in Salzgruppen überführt werden. Ein Einbau von anionischen Gruppen auf diese Weise erübrigt sich selbstverständlich, wenn als Aufbaukomponente c) bereits Salze, insbesondere Alkalisalze, von geeigneten Amino- bzw. Hydroxycarbon- bzw. -sulfonsäuren zum Einsatz gelangen.

In einer bevorzugten Ausführungsform erfolgt die Herstellung der Dispersionen derart, daß man zunächst in erster Stufe eine Mischung von
- 10 bis 80, vorzugsweise 20 bis 70 Gew.-% der Ausgangskomponente a),
- 10 bis 80, vorzugsweise 10 bis 60 Gew.-% der Ausgangskomponente b) und
- 1 bis 10, vorzugsweise 2 bis 7 Gew.-% der Ausgangskomponente c),
- mit 5 bis 40, vorzugsweise 7 bis 30 Gew.-% der Ausgangskomponente f), umsetzt, wobei man ein Äquivalentverhältnis NCO : OH im Bereich von 1,05 : 1 bis 2 : 1 und insbesondere von 1,2 : 1 einstellt und die so erhaltene "Zwischenverbindung" in zweiter Stufe mit
- 0,5 bis 20 Gew.-% der Ausgangskomponente d) umsetzt.

Dabei gilt wiederum, daß sich die zu a), b), c), d) und f) gemachten Prozentangaben zu 100 % ergänzen und daß am Ende der zweiten Stufe praktisch keine freien NCO-Gruppen mehr nachweisbar sind. Im Hinblick auf den Einsatz von Lösungsmitteln, den Einsatz von Katalysatoren und dem Dispergieren in Wasser gilt im übrigen das oben Gesagte.

Bei der A**usgangskomponente a)** handelt es sich um Dimerdiole. Dimerdiole sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 70% und insbesondere 90% aufweisen und bei denen die Zahl der C-Atome pro Dimermolekül überwiegend im Bereich von 36 bis 44 liegt.

Bei der **Ausgangskomponente b)** handelt es sich um Dimerdiolcarbonate und/oder Dimerdiolether. Bei den Dimerdiolcarbonatenen - oft auch als Polycarbonatdiole bezeichnet - sind difunktionelle Polyole des Molekulargewichtsbereichs 400 bis 6.000 bevorzugt. Dimerdiolether sind spezielle Polyetherpolyole, die als Strukturbaustein Dimerdiol enthalten. Dimerdiolether sind durch Alkoxylierung von Dimerdiolen zugänglich. Bei der Herstellung dieser alkoxylierten Diole geht man üblicherweise wie folgt vor: In einem ersten Schritt bringt man das gewünschte Dimerdiol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Dimerdiol erhalten. Bei den Additionsprodukten handelt es sich mithin um EO-Addukte oder um PO-Addukte oder um EO/PO-Addukte an das jeweilige Dimerdiol; bei den EO/PO-Addukten kann dabei die Anlagerung von EO und PO statistisch oder blockweise erfolgen.
Für die Dimerdiolether ist ein Molekulargewichtsbereich von 350 bis 3.500 bevorzugt.

Bei der **Ausgangskomponente c)** handelt es sich um mindestens eine Hydroxycarbonsäure und /oder Aminocarbonsäure und/oder Aminosulfonsäure und/oder Hydroxysulfonsäure der etwa in US-A-3 479 310 genannten Art. Zu den bevorzugten Komponenten c) gehören 2,2-Bis-(hydroxymethyl)-alkanmonocarbonsäuren mit insgesamt 5 bis 8 C-Atomen. Ganz besonders bevorzugt sind dabei 2,2-Dimethylolpropionsäure und 2,2-Dimethylolbuttersäure. Gewünschtenfalls kann man die Komponenten c) auch in Form ihrer Alkalimetallsalze einsetzen, vorausgesetzt, diese Salze sind mit den übrigen Aufbaukomponenten der Polyurethane hinreichend kompatibel.

Bei der **Ausgangskomponente d)** handelt es sich um mindestens zwei Hydroxyl- und/oder Aminogruppen enthaltende Verbindungen des Molekulargewichtsbereichs 60 bis 300. Geeignet sind beispielsweise Ethylenglykol, Propylenglykol, Neopentylglykol, Butandiol, Hexandiol, Cyclohexandimethanol, Diethylenglykol, Dipropylenglykol, Trimethylolpropan (TMP), 1,4-Cyclohexandiol, Glycerin, Pentaerythrit, Aminoethanol, Aminoisopropanol sowie Gemische dieser und anderer entsprechender Verbindungen.

Bei der **Ausgangskomponente e)** handelt es sich nichtionische hydrophile Polyethylenglykole, die ein oder zwei Hydroxylgruppen aufweisen. Vorzugsweise handelt es sich hierbei um 1- oder 2-wertige Polyetheralkohole des Molekulargewichtsbereichs 350 bis 2.000, wie sie in an sich bekannter Weise durch Alkoxylierung von 1- oder 2-wertigen Alkoholen als Startermoleküle erhalten werden, wobei als Alkylenoxide vorzugsweise Ethylenoxid oder Gemische aus Ethylenoxid und Propylenoxid zum Einsatz gelangen.

Bei der **Ausgangskomponente f)** handelt es sich um Isocyanate. Dabei unterliegt die Wahl der Isocyanate an sich keinen besonderen Einschränkungen. Prinzipiell lassen sich somit alle dem Fachmann einschlägig bekannten Isocyanate einsetzen.

Vorzugsweise setzt man Diisocyanate, Oligo- bzw. Polyisocyanate, sowie Gemische dieser Verbindungen ein. Zu den Polyisocyanaten im Sinne der vorliegenden Erfindung gehören beispielsweise Addukte von Diisocyanaten an Trimethylolpropan, Biurete, Uretdione (cyclodimerisierte Isocyanate), Isocyanurate (cyclotrimerisierte Isocyanate), Allophanate, Carbodiimid-basierte Isocyanate und dergleichen (lediglich beispielhaft sei im Hinblick auf das Wissen des Fachmanns bezüglich der Di- und Polyisocyanate verwiesen auf: **Ullmanns Encyklopädie der technischen Chemie, Band 19, 4. Auflage, Weinheim 1980, Seiten 302-304** sowie auf **Kirk-Othmer, Encyclopedia of Chemical Technology, 4th edition, New York 1995, Volume 14, Seiten 902-934)** sowie schließlich auf **Gerhard W.Becker [Hrsg.], Kunststoff-Handbuch, Band 7: "Polyurethane" [hrsg. Von Günter Oertel], 3. Aufl., München 1993, Seiten 11-21, 76-103)**. Besonders hingewiesen sei auf handelsübliche Polyisocyanate, beispielsweise Polymer-MDI und dergleichen, die in verschiedenen Polymerisationsgraden kommerziell erhältlich sind.

Bei den Diisocyanaten setzt man vorzugsweise Verbindungen der allgemeinen Struktur O=C=N-X-N=C=O ein, wobei X ein aliphatischer, alicyclischer oder aromatischer Rest ist, vorzugsweise ein aliphatischer oder alicyclischer Rest mit 4 bis 18 C-Atomen.

Geeignete Diisocyanate sind beispielsweise: 1,5-Naphthylendiisocyanat, 4,4'-Diphenylmethandiisocyanat (= Methylen-diphenylen-diisocyanat, **MDI**), hydriertes MDI (**H**_{**12**}**MDI**, eine cyloaliphatische Verbindung), Xylylendiisocyanat (**XDI**), Tetramethylxylylendiisocyanat **(TMXDI)**, 4,4'-Diphenyldimethylmethandiisocyanat, Di- und Tetraalkyldiphenylmethandüsocyanat, 4,4'-Dibenzyldiisocyanat, 1,3-Phenylendiisocyanat, 1,4-Phenylendiisocyanat, die Isomeren des Toluylendüsocyanats **(TDI,** insbesondere das technische Isomerengemisch aus im wesentlichen 2,4- und 2,6-Toluylen-diisocyanat), 1-Methyl-2,4-diisocyanato-cyclohexan, 1,6-Diisocyanato-2,2,4-trimethylhexan, 1,6-Diisocyanato-2,4,4-trimethylheoan, 1-Isocyanatomethyl-3-isocyanato-1,5,5-trimethyl-cyclohexan (Isophorondiisocyanat = **IPDI),** chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexamethylendiisocyanat **(HDI),** Dicyclohexylmethandiisocyanat, Cyclohexan-1,4-diisocyanat. Ethylen-diisocyanat, Phthalsäure-bis-isocyanatoethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-düsocyanat mit 1 mol Thiodiglykol oder Dihydroxydihexylsulfid. Weitere wichtige Diisocyanate sind Trimethylhexamethylendiisoeyanat, 1,4-Diisocyanatobutan, 1,12-Diisocyanatododecan und Dimerfettsäure-diisocyanat (Handelsprodukt "Sovermol DDI 1410" der Cognis Deutschland GmbH - früher der Henkel KgaA).
Besonders geeignete Diisocyanate sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-Diisocyanat.
In einer Ausführungsform der vorliegenden Erfindung setzt man lineare, aliphatische Diisocyanate des Molekulargewichtsbereichs 168 bis 1.000 ein, wobei insbesondere mindestens 50 Gew.-% der Isocyanatkomponente Diisocyanate des Molekulargewichtsbereichs 168 bis 300 darstellen.

In einer Ausführungsform der vorliegenden Erfindung setzt man höherfunktionelle Isocyanate ein, worunter solche Isocyanate verstanden werden, die eine mittlere NCO-Funktionalität von mindestens 2,0 aufweisen. Insbesondere sei hier auf alle handelsüblichen Polyisocyanate (beispielsweise Polymer-MDI und dergleichen sowie die in **EP-A-438 836** offenbarten Polyisocyanate der Formeln 1 bis 7) verwiesen, die eine NCO-Funktionalität oberhalb von 2,0 aufweisen. Wie dem Fachmann bekannt spricht man von mittlerer NCO-Funktionalität, weil die entsprechenden höherfunktionellen Isocyanate nicht zwingend in Form chemisch einheitlicher Individuen wie etwa cyclotrimerisierten Isocyanaten vorliegen müssen, sondern - insbesondere bei handelsüblichen technischen Produkten - häufig Gemische verschiedener chemischer Individuen darstellen, die jeweils definierte NCO-Funktionalitäten aufweisen.

Gewünschtenfalls führt man die Herstellung der erfindungsgemäß einzusetzenden Polyurethane in einem **Lösungsmittel durch**. Geeignete Lösungsmittel sind etwa N-Methylpyrrolidon, Methoxyhexanon, Diethylenglykoldimethylether, Methylethylketon, Methylisobutylketon, Aceton, Xylol, Toluol, Butylacetat, Methoxypropylacetat ode Gemische dieser oder anderer Lösungsmittel. Eingesetzte organische Lösungsmittel kann man vor, während oder nach dem Dispergierschritt ganz oder teilweise entfernen. Die hiezu nötigen Techniken sind bekannt, beispielsweise Destillation, azeotrope Destillation oder Durchleiten eines Inertgasstromes durch das Reaktionsgemisch.

Gewünschtenfalls führt man Urethanisierungsreaktion, also die Umsetzung der Komponenten a) bis f), in Gegenwart geeigneter **Katalysatoren** durch. Geeignete Katalysatoren für die Urethanisierungsreaktion, d.h. die Umsetzung der Komponenten a) bis f), können z.B. sein: Triethylamin, Zinn-II-octoat, Dibutylzinnoxid, Dibutylzinndilaurat und andere gebräuchliche Katalysatoren.

Geeignete **Basen zur Neutralisation** der zunächst eingebauten Säuregruppen sind beispielsweise Ammoniak, N-Methylmorpholin, Triethylamin, Dimethylethanolamin, Methyldiethanolamin, Morpholin, Dimethylisopropanolamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid und Kaliumhydroxid.
Bevorzugte Neutralisationsmittel sind Ammoniak, Dimethylethanolamin, Methyldiethanolamin und Dimethylisopropanolamin.

Zur Durchführung des Dispergierschrittes kann wahlweise das Wasser-/Neutralisationsmittelgemisch zum Harz, das Harz zum Wasser-/Neutralisationsgemisch oder das Harz-/Neutralisationsmittelgemisch zum Wasser gegeben werden. Unter "Harz" ist hierbei entweder das lösungsmittelfrei hergestellte Polyurethan oder seine Lösung in einem der beispielhaft genannten Hilfslösungsmittel zu verstehen. Der Dispergierschritt erfolgt im allgemeinen innerhalb des Temperaturbereichs von 20 bis 100, vorzugsweise 40 bis 100 °C. Die Dispergierbarkeit der Polyurethane in Wasser kann gewünschtenfalls durch Mitverwendung von externen Emulgatoren beim Dispergieren verbessert werden.

Die erfindungsgemäßen Polyurethan-Dispersionen weisen im allgemeinen einen Gehalt an organischen Lösungsmitteln von unter 10, vorzugsweise unter 6 und besonders bevorzugt unter 4 Gew.-% auf.

Den erfindungsgemäßen Dispersionen können im Anschluß an ihre Herstellung zur Erzielung bestimmter Eigenschaften weitere organische Lösungsmittel, insbesondere alkoholische Lösungsmittel wie beispielsweise Ethanol, n-Butanol, n-Octanol, Butyldiglykol, Ethyldiglykol, Methyldiglykol oder Methoxypropanol zugesetzt werden.

Die erfindungsgemäßen Dispersionen stellen wäßrige Bindemittelkomponenten für Beschichtungsmittel auf Basis von in Wasser dispergierten Polyhydroxyverbindungen und Vernetzerharzen dar. Hierbei können die erfindungsgemäßen Dispersionen als alleinige Bindemittel oder aber auch in Abmischung mit wäßrigen Dispersionen anderer Bindemittel zum Einsatz gelangen. Die Polyolkomponente der erfindungsgemäßen Beschichtungsmittel besteht demzufolge, bezogen auf Feststoff, zu 25 bis 100 Gew.-% aus Polyurethanen der erfindungsgemäßen Art und zu 0 bis 75 Gew.-% aus anderen, in Wasser dispergierbaren oder löslichen Bindemitteln. Als andere Bindemittel sind insbesondere an sich bekannte, in Wasser dispergierbare, gegebenenfalls Hydroxylgruppen aufweisende Polyesterharze, Polyacrylatharze oder Polyurethanharze, die sich bezüglich ihrer chemischen Zusammensetzung von den erfindungsgemäßen Polyurethanen unterscheiden, zu verstehen. Bevorzugt sind dabei Polyurethanharze, wie sie z.B. in den PUR-Dispersionen gemäß DE-A-26 51 506 enthalten sind. Diese Polyurethanharze enthalten vorzugsweise keine Hydroxylgruppen, sind linear aufgebaut und haben ein aus der Stöchiometrie der zu ihrer Herstellung eingesetzten Ausgangsmaterialien berechenbares Molekulargewicht Mn (Zahlenmittel) von mindestens 15.000. Sie sind anionisch und/oder nichtionisch-hydrophil modifiziert. Bevorzugt als Komponente A) sind Dispersionen, die, bezogen auf Feststoff, 25 bis 80 Gew.-% an Polyurethanen der erfindungsgemäßen Art und 75 bis 20 Gew.-% der Polyurethanharze gemäß DE-A-26 51 506 enthalten.

Geeignete **Vernetzerharze B)** sind Aminoplastharze, gegebenenfalls hydrophil modifzierte Polyisocyanate mit blockierten Isocyanatgruppen und gegebenenfalls hydrophil modifizierte Polyisocyanate mit freien Isocyanatgruppen.

Geeignete Aminoplastharze sind beispielsweise wasserverdünnbare bzw. - dispergierbare Melamin- bzw. Harnstoff-Formaidehyd-Kondensationsprodukte. Die Melaminharze können jedoch auch ganz oder teilweise durch andere vernetzende Aminoplaste, ersetzt werden.

Ebenfalls geeignete Vernetzerharze sind blockierte Polyisocyanate, beispielsweise auf Basis von Isophorondiisocyanat, Hexamethylendiisocyanate, 1,4-Diisocyanatcyclohexan, Dicyclhexylmethandiisocyanat, 1,3- Diisocyanatobenzol, 1,4-Diisocyanatobenzol, 2,4-Diisocyanato-1- methylbenzol, 1,3-Diisocyanato-2-methylbenzol, 1,3- Bisisocyanatomethylbenzol, 2,4-Bisisocyanatomethyl-1,5-dimethyl-benzol, Bis-(4-isocyanatophenyl)-propan, Tris-(4-isocyanatophenyl)-methan, Trimethyl-1,6-diisocyanatohexan oder blockierte "Lackpolyisocyanate" wie Biuretgruppen aufweisende Polyisocyanate auf Basis von 1,6-Diisocyanatohexan, Isocyanuratgruppen aufweisende Polyisocyanate auf Basis von 1,6-Diisocyanatohexan oder Urethangruppen aufweisende Lackpolyisocyanate auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits, jeweils mit blockierten Isocyanatgruppen.

Ebenfalls geeignet sind z.B. durch Salzgruppen oder Polyetherstrukturen hydrophilierte, blockierte Polyisocyanate.

Geeignete Blockierungsmittel für diese Polyisocyanate sind beispielsweise einwertige Alkohole wie Methanol, Ethanol, Butanol, Hexanol, Benzylalkohol, Oxime wie Methylethylketoxim, Lactame wie ε-Caprolactam, Phenole oder CHacide Verbindungen wie z.B. Diethylmalonat.

Als freie Isocyanatgruppen enthaltende Polyisocyanatvernetzer B) sind beispielsweise organische Polyisocyanate mit aliphatisch, cycloaliphatisch, araliphatisch und/oder aromatisch gebundenen, freien Isocyanatgruppen, die bei Raumtemperatur flüssig sind, geeignet. Solche Polyisocyanatvemetzer B) weisen im allgemeinen bei 23 °C eine Viskosität von 50 bis 10.000, vorzugsweise von 50 bis 1 500 mPas auf.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan und/oder Dicyclohexylmethandiisocyanat. Unter "Lackpolyisocyanaten" auf Basis dieser Diisocyanate sind die an sich bekannten Biuret-, Urethan-, Allophanat-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger 0,5 Gew.-% befreit worden sind. Zu den bevorzugten, erfindungsgemäß zu verwendenden, aliphatischen Polyisocyanaten gehören den obengenannten Kriterien entsprechende, Biuretgruppen aufweisende Polyisocyanate auf Basis von Hexamethylendiisocyanat und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat und die im wesentlichen aus N,N',N"-Tris-(6-isocyanatohexyl)-isocyanurat im Gemisch mit untergeordneten Mengen an seinen höheren Homologen bestehen.

Erfindungsgemäß ebenfalls geeignet, jedoch weniger bevorzugte aromatische Polyisocyanate sind insbesondere "Lackpolyisocyanate" auf Basis von 2,4-Diisocyanatotoluol oder dessen technische Gemische mit 2,6-Diisocyanatotoluol oder auf Basis von 4,4'-Diisocyanatodiphenylmethan bzw. dessen Gemische mit seinen Isomeren und/oder höheren Homologen. Ebenfalls geeignete Polyisocyanatvemetzer sind solche, die durch den Einbau von Polyether- und/oder Salzgruppen hydrophiliert sind.

Bevorzugte Vernetzerharze sind die vorstehend beschriebenen Polyisocyanatvemetzer mit freien Isocyanatgruppen, insbesondere hydrophilierte Vernetzer auf dieser Basis. Besonders bevorzugt handelt es sich bei der Polyisocyanatkomponente B) um solche Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23 °C von 50 bis 1.500 mPas.

In den erfindungsgemäßen Beschichtungsmitteln liegen im allgemeinen, jeweils bezogen auf Feststoff, 50 bis 95, vorzugsweise 65 bis 90 Gew.-% der Hydroxylgruppen aufweisenden Komponente A) in Kombination mit 5 bis 50, vorzugsweise 10 bis 35 Gew.-% Vernetzer B) vor. Der Festkörpergehalt der Beschichtungsmittel liegt im allgemeinen bei 35 bis 70 Gew.%.

Die erfindungsgemäßen Beschichtungsmittel können selbstverständlich die an sich bekannten Hilfs- und Zusatzmittel der Lacktechnologie enthalten. Hierzu gehören beispielsweise Entschäumungsmittel, Verdickungsmittel, Verlaufshilfsmittel, Pigmente, Mattierungsmittel, Dispergierhilfsmittel für die Pigmentverteilung und dergleichen.

Die erfindungsgemäßen Beschichtungsmittel, die Melaminharze oder blockierte Polyisocyanate als Vernetzerharze enthalten bzw. Beschichtungsmittel oder Dichtmassen auf Basis derartiger Bindemittelkombinationen, stellen in der Hitze vemetzbare Einkomponenten-Systeme dar, die bei Raumtemperatur lagerfähig sind. Entsprechende Systeme, die als Vernetzer Polyisocyanate mit freien Isocyanatgruppen enthalten, stellen Zweikomponenten-Systeme dar, die durch Abmischung der Einzelkomponenten erhalten werden und bei Raumtemperatur eine nur begrenzte Topfzeit aufweisen.

Zu den bevorzugten Anwendungsgebieten für die erfindungsgemäßen Polyurethan-Dispersionen gehört ihre Verwendung als Bindemittelkomponente in elastischen Lacken, Beschichtungs- und Dichtmassen, etwa für die Kunststoffbeschichtung und Automobilinnenlackierung. Die erfindungsgemäßen Polyurethan-Dispersionen eignen sich jedoch auch als Bindemittelkomponente für wäßrige Kunststoff-, Folien-, Metall- oder Holzlacke sowie als Bindemittelkomponente zur Beschichtung von mineralischen Substraten.

### Beispiele

### 1. Abkürzungen

**OHZ** = Hydroxylzahl (OH-Zahl), bestimmt nach DIN 53240
**SZ** = Säurezahl, bestimmt nach DIN 53402
**MEK** = Methylethylketon (Lösungsmittel)

### 2. Eingesetzte Substanzen

**Sovermol 908** = Dimerdiol (Handelsprodukt der Firma Cognis Deutschland GmbH)
**Sovermol 910** = Dimerdiolpolyether (Handelsprodukt der Firma Cognis Deutschland GmbH)
**Sovermol 913** = Dimerdiolpolycarbonat (Handelsprodukt der Firma Cognis Deutschland GmbH)
**Quadrol L=** Tetrakis-(2-hydroxypropyl)-ethylendiamin (Handelsprodukt der Firma Cognis Deutschland GmbH)
**Polyester 1 (PE1):** In einem Dreihalskolben versehen mit Rührer, Innenthermometer, und Wasserabscheider wurden 505 g (0.9 mol) Sovermol 908 (OHZ = 200) und 87.7 g (0.6 mol) Adipinsäure langsam auf 160°C erhitzt und so lange bei dieser Temperatur gehalten bis sich kein Wasser mehr abschied. Der resultierende Polyester (PE1) wies eine OHZ von 66 und eine SZ von 2,3 auf.
**Polyester 2 (PE2):** In einem Dreihalskolben versehen mit Rührer, Innenthermometer, und Wasserabscheider wurden 561.2 g (1 mol) Sovermol 908 (OHZ = 200) und 73.1 g (0.5 mol) Adipinsäure unter Zusatz von 100ppm Trifluormethansulfonsäure langsam auf 160°C erhitzt und so lange bei dieser Temperatur gehalten bis sich kein Wasser mehr abscheidet. Der resultierende Polyester (PE2) wies nach anschließender Neutralisation mit Quadrol L eine OHZ von 77 und eine SZ von 0,2 auf.
Basonat 8878: Handelsübliches Isocyanat (Fa. BASF)
Cymel 327: Formaldehyd- Melaminharz (Handelsprodukt der Fa. Cytec).

### 3. Herstellbeispiele

### Beispiel 1 (B1)

In einem Dreihalskolben versehen mit Rührer, Innenthermometer, Tropftrichter und Rückflußkühler wurden 195 g Sovermol 908 (OHZ = 205), 407,3 g Sovermol 913 (OHZ = 55), 35,2 g Dimethylolpropionsäure und 40.0 g N-Methylpyrrolidon gegeben und mit 200 g Metylethylketon unter Rühren bei 75°C aufgelöst. Anschließend wurden 218,6 g Isophorondiisocyanat zugetropft und die Reaktionsmischung auf 90°C erwärmt. Nach Erreichen eines NCO-Gehaltes von 1,62 Gewichtsprozent wurden 44 g Trimethylolpropan zugesetzt und solange gerührt, bis der NCO-Gehalt auf 0,09 Gewichtsprozent abgesunken war. Zur Neutralisation wurden dann 15,5 g Dimethylethanolamin zugefügt. 200g des Produktes wurden in MEK aufgenommen, mit 155 ml heißem Wasser versetzt und das Solvens entfernt. Die resultierende milchig-weiße wäßrige Dispersion wies einen Feststoffgehalt von 51% auf.

### Beispiel 2 (B2)

In einem Dreihalskolben versehen mit Rührer, Innenthermometer, Tropftrichter und Rückflußkühler wurden 814,5 g (0,8 mol OH) Sovermol 913 (OHZ = 55), 27 g (0.2 mol) Dimethylolpropionsäure und 90,8 g N-Methylprrolidon gegeben und bei 75°C unter Rühren aufgeschmolzen. Anschließend wurden 155,4 g (0.7 mol) Isophorondiisocayanat zugetropft und die Reaktionsmischung auf 90°C erhitzt. Nach Erreichen eines NCO-Gehaltes von 1,62 Gewichtsprozent wurden 29,5 g (0,22 mol) Trimethylolpropan zugesetzt und solange bei 100°C gerührt bis der NCO-Gehalt auf 0,09 Gewichtsprozent abgesunken war. Zur Neutralisation wurden dann 17,9g Dimethylethanolamin zugefügt. 200g des Produktes wurden in MEK aufgenommen, mit 183 ml heißem Wasser versetzt und das Solvens entfernt. Die resultierende milchig-weiße wäßrige Dispersion wies einen Feststoffgehalt von 50% auf.

### Beispiel 3 (B3)

In einem Dreihalskolben versehen mit Rührer, Innenthermometer, Tropftrichter und Rückflußkühler wurden 344 g (Sovermol 910, OHZ 57), 17 g Dimethylpropionsäure und 45,4 g N-Methylprrolidon gegeben und in 81 g MEK bei 75°C unter Rühren gelöst. Anschließend werden 77,7 g Isophorondiisocyanat zugetropft und die Reaktionsmischung auf 90°C erhitzt. Nach Erreichen eines NCO-Gehaltes von 1,62 Gewichtsprozent werden 14, g TMP zugesetzt und solange bei 100°C gerührt bis der NCO-Gehalt auf 0,09 Gewichtsprozent abgesunken ist. Zur Neutralisation wurden dann 11,2 g Dimethylethanolamin zugefügt. 210g des Produktes wurden in MEK aufgenommen, mit 155 ml heißem Wasser versetzt und das Solvens entfernt. Die resultierende milchig-weiße wäßrige Dispersion wies einen Feststoffgehalt von 48% auf.

### Beispiel 4 (B4)

In einem Dreihalskolben versehen mit Rührer, Innenthermometer, Tropftrichter und Rückflußkühler werden 195 g Sovermol 908 (OHZ = 205), 393,0 g Sovermol 910 (OHZ = 57), 35,2 g Dimethylolpropionsäure und 40,0 g N-Methylpyrrolidon gegeben und mit ca. 200g Metylethylketon unter Rühren aufgelöst. Anschließend wurden 218,6 g Isophorondiisocyanat zugetropft, wobei sich die Reaktionsmischung erwärmte. Nach Erreichen eines NCO-Gehaltes von 1,62 Gewichtsprozent wurden 44 g Trimethylolpropan zugesetzt und solange gerührt bis der NCO-Gehalt auf 0,09 Gewichtsprozent abgesunken war. Zur Neutralisation wurden dann 15,5 g Dimethylethanolamin zugefügt. 190g des Produktes wurden in MEK aufgenommen, mit 155 ml heißem Wasser versetzt und das Solvens entfernt. Die resultierende milchig-weiße wäßrige Dispersion wies einen Feststoffgehalt von 52% auf.

### Vergleichsbeispiel 1 (V1)

In einem Dreihalskolben versehen mit Rührer, Innenthermometer, Tropftrichter und Rückflußkühler wurden 136g des Polyesters 1 (PE1), 55 g Sovermol 908 (OHZ = 200), 204 g Sovermol 913 (OHZ = 55), 17,6 g Dimethylpropionsäure und 22,4 g N-Methylpyrrolidon gegeben und mit 125 g Metylethylketon unter Rühren bei 75°C aufgelöst. Anschließend wurden 109,3 g Isophorondiisocyanat zugetropft und die Reaktionsmischung auf 90°C erwärmt. Nach Erreichen eines NCO-Gehaltes von 1,29 Gewichtsprozent wurden 22 g Trimethylolpropan zugesetzt und solange gerührt bis der NCO-Gehalt auf 0,09 Gewichtsprozent abgesunken war. Zur Neutralisation wurden dann 7,8 g Dimethylethanolamin zugefügt. 170g des Produktes wurden in MEK aufgenommen, mit 160 ml heißem Wasser versetzt und das Solvens entfernt. Die resultierende milchig-weiße wäßrige Dispersion wies einen Feststoffgehalt von 50% auf

### Vergleichsbeispiel 2 (V2)

In einem Dreihalskolben versehen mit Rührer, Innenthermometer, Tropftrichter und Rückflußkühler wurden 120g des Polyesters 2 (PE2), 55 g Sovermol 908 (OHZ = 200), 204 g Sovermol 913 (OHZ = 55), 17.6 g Dimethylpropionsäure und 22,4 g N-Methylpyrrolidon gegeben und mit 130 g Metylethylketon unter Rühren bei 75°C aufgelöst. Anschließend wurden 109,3 g Ispphorondiisocyanat zugetropft und die Reaktionsmischung auf 90°C erwärmt. Nach Erreichen eines NCO-Gehaltes von 1,29 Gewichtsprozent wurden 22 g Trimethylolpropan zugesetzt und solange gerührt bis der NCO-Gehalt auf 0,09 Gewichtsprozent abgesunken war. Zur Neutralisation wurden dann 7,8 g Dimethylethanolamin zugefügt. 190g des Produktes wurden in MEK aufgenommen, mit 175 ml heißem Wasser versetzt und das Solvens entfernt. Die resultierende milchig-weiße wäßrige Dispersion wies einen Feststoffgehalt von 50% auf.

### 4. Anwendungstechnische Untersuchungen

**Filmbildung:** Die Polyurethandispersionen gemäß dem erfindungsgemäßen Beispiel 1 sowie gemäß den Vergleichsbeispielen 1 und wurden jeweils durch Verdünnen mit Wasser auf einen Feststoffgehalt von 40 Gew.-% eingestellt. Anschließend erfolgte die Zugabe und intensive Vermischung mit einem handelsüblichen, für wässerige Systeme geeigneten Isocyanat und zwar Basonat 8878. Das Isocyanat wurde in einer Menge zugegeben, die einem NCO : OH Verhältnis von 1 : 1 entsprach. Die fertige Mischung wurde mit einem Spaltrakel auf einen ebenen Untergrund - hier: eine Glasplatte - aufgetragen und nach einer Trockenzeit von 7 Tagen bei einer Temperatur von 23° C auf die erreichte Filmhärte geprüft und zwar mittels der Pendelhärte nach König (DIN 53 157). Darüber hinaus wurde die Alkoholbeständigkeit (gegenüber Ethanol; gemäß DIN 68861) untersucht. Die Ergebnisse sind Tabelle 1 zu entnehmen (Spalten 2 und 3).

**Einbrennlacke:** Darüber hinaus wurden aus den Polyurethandispersionen gemäß dem erfindungsgemäßen Beispiel 1 sowie gemäß den Vergleichsbeispielen 1 und jeweils Einbrennlacke hergestellt und zwar wie folgt: Die Polyurethandispersionen gemäß dem erfindungsgemäßen Beispiel 1 sowie gemäß den Vergleichsbeispielen 1 und wurden jeweils durch Verdünnen mit Wasser auf einen Feststoffgehalt von 40 Gew.-% eingestellt. Anschließend erfolgte die Zugabe und intensive Vermischung mit einem handelsüblichen für wässerige Systeme geeigneten MelaminFormaldehydharz und zwar Cymel 327. Dabei wurde ein Gewichtsverhältnis von Polyurethandispersion zu Amin-Formaldehydharz von 7 : 3 eingestellt. Die fertige Mischung wurde mit einem Spaltrakel auf einen ebenen Untergrund - hier: eine Glasplatte - aufgetragen und anschließend bei einer Temperatur von 120° C 20 Minuten getrocknet. Die erreichte Filmhärte wurde mittels der Pendelhärte nach König (DIN 53 157) geprüft. Die Ergebnisse sind Tabelle 1 zu entnehmen (Spalte 4).

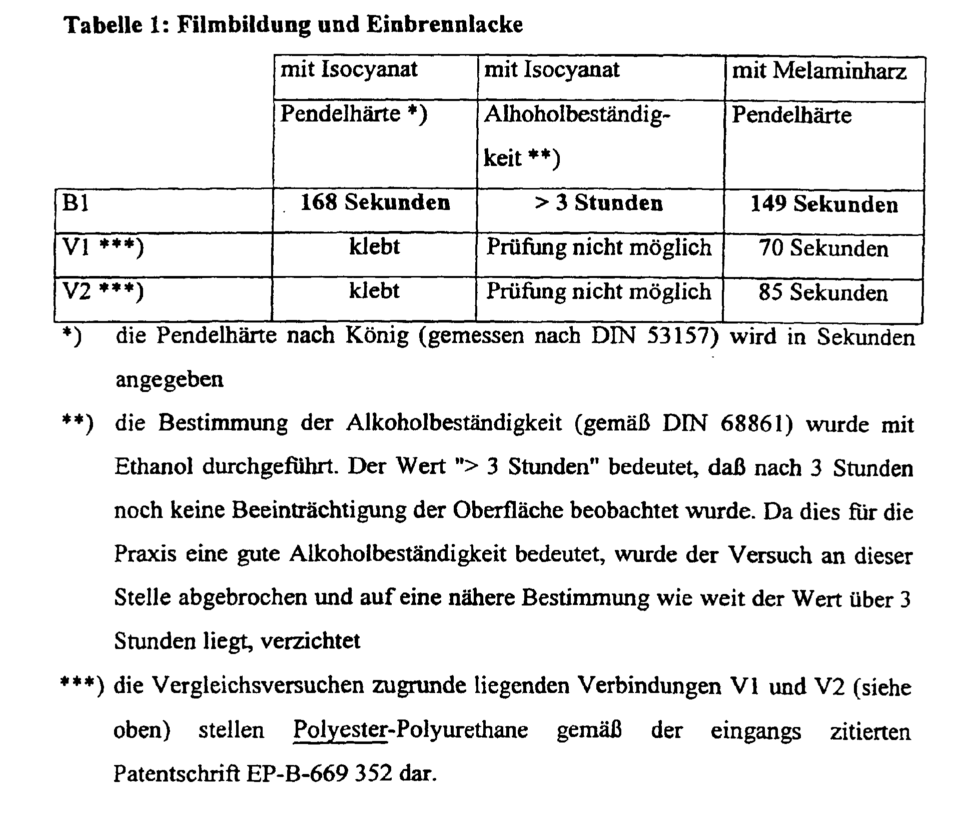

Aus Tabelle 1 ist zu erkennen, daß das erfindungsgemäße Beispiel 1 sowohl bei der Filmbildung mit Isocyanat als auch bei den Einbrennlacken den Vergleichsbeispielen deutlich überlegen ist.

## Patentansprüche

1. Wäßrige Dispersionen von Polyurethanen mit einer Säurezahl von 5 bis 60 mg KOH/g Polyurethan-Feststoff, einem Gehalt an Hydroxylgruppen von 0,25 bis 6,5 Gew.-% und an Urethangruppen (berechnet als -NH-CO-O-) von 2 bis 25 Gew.-%, jeweils bezogen auf Polyurethan-Feststoff, **dadurch gekennzeichnet, daß** die Polyurethane gegebenenfalls zumindest teilweise mit Basen neutralisierte, Umsetzungsprodukte darstellen von
a) 10 bis 80 Gew.-% mindestens eines Dimerdiols,
b) 10 bis 80 Gew.-% mindestens eines Dimerdiolcarbonats und/oder Dimerdiolethers,
c) 1 bis 10 Gew.-% mindestens einer Säurekomponente bestehend aus i) Hydroxycarbonsäuren, ii) Aminocarbonsäuren, iii) Aminosulfonsäuren und iv) Hydroxysulfonsäuren,
d) 0 bis 20 Gew.-% einer niedermolekularen Komponente, bestehend aus mindestens zwei Hydroxyl- und/oder Aminogruppen enthaltenden Verbindungen des Molekulargewichtsbereichs 60 bis 300,
e) 0 bis 20 Gew.-% mindestens eines hydrophilen, Ethylenoxideinheiten aufweisenden ein- oder mehrwertigen Alkohols des Molekulargewichtsbereichs 350 bis 3.000,
f) 5 bis 40 Gew.-% einer Isocyanatkomponente,
wobei sich die genannten Prozentangaben zu 100 ergänzen.

2. Verwendung der wäßrigen Dispersionen gemäß Anspruch 1 zur Herstellung wäßriger Beschichtungsmittel auf Basis von in Wasser dispergierten Bindemitteln und Vernetzerharzen, ausgewählt aus der Gruppe bestehend aus Aminoplastharzen, gegebenenfalls hydrophil modifizierten blockierten Polyisocyanaten und gegebenenfalls hydrophil modifizierten Polyisocyanaten mit freien Isocyanatgruppen.

3. Wäßriges, gegebenenfalls die üblichen Hilfs- und Zusatzstoffe enthaltendes Beschichtungsmittel, welches als Bindemittel eine Kombination aus
A) einer Polyolkomponente mit
B) einem Vernetzerharz, ausgewählt aus der Gruppe bestehend aus Melaminharzen, gegebenenfalls hydrophil modifizierten blockierten Polyisocyanaten und gegebenenfalls hydrophil modifizierten Polyisocyanaten mit freien Isocyanatgruppen,
enthält, wobei die Polyolkomponente A) zu 25 bis 100 Gew.- % aus einem Hydroxylgruppen aufweisenden Polyurethan der gemäß Anspruch 1 in Wasser dispergiert vorliegenden Art und zu 0 bis 75 Gew.-% aus anderen, von diesen Polyurethanen verschiedenen Bindemitteln besteht.

## Revendications

1. Dispersions aqueuses de polyuréthanes avec un indice d'acidité de 5 à 60 mg de KOH par g de matière solide en polyuréthane, une teneur de 0,25 à 6,5 % en poids en groupes hydroxyle et de 2 à 25 % en poids, en groupes uréthane (calculés en tant que -NH-CO-O-) chaque fois par rapport à la matière solide en polyuréthane,
**caractérisées en ce que**
les polyuréthanes correspondent le cas échéant à des produits de réaction, neutralisés au moins en partie avec des bases, de
a) 10 à 80 % en poids d'au moins un diol dimère,
b) 10 à 80 % en poids d'au moins un carbonate de diol dimère et/ou un éther de diol dimère,
c) 1 à 10 % en poids d'au moins d'un composant acide constitué i) d'acides hydroxycarboxyliques, ii) d'acides aminocarboxyliques, iii) d'acides aminosulfoniques et iv) d'acides hydroxysulfoniques,
d) 0 à 20 % en poids d'un composant de faible poids moléculaire, constitué de compositions de poids moléculaire dans la gamme de 60 à 300, contenant au moins deux groupes hydroxyle et/ou amino,
e) 0 à 20 % en poids au moins d'un alcool mono ou polyvalent, moléculaire dans la gamme de 350 à 3.000, présentant au moins une unité d'oxyde d'éthylène hydrophile,
f) 5 à 40 % en poids d'un composant d'isocyanate,
les indications en pourcentage citées se complétant à 100.

2. Utilisation des dispersions aqueuses selon la revendication 1, pour l'obtention d'agents de revêtement aqueux à base de liants et de résines de réticulation, dispersés dans de l'eau, choisis dans le groupe constitué de résines aminoplastes, de polyisocyanates bloqués, éventuellement rendus hydrophiles, et de polyisocyanates avec des groupes isocyanate libres éventuellement rendus hydrophiles.

3. Agent de revêtement aqueux, contenant éventuellement les adjuvants et additifs usuels, qui contient comme liant une combinaison
A) d'un composant polyol avec
B) une résine de réticulation, choisie dans le groupe constitué de résines de mélamine, des polyisocyanates bloqués, éventuellement rendus hydrophiles, et de polyisocyanates avec des groupes isocyanate libres éventuellement rendus hydrophiles,
dans lequel le composant polyol A) est constitué pour 25 à 100 % en poids d'un polyuréthane présentant des groupes hydroxyle, dispersé dans de l'eau selon la revendication 1, et pour 0 à 75 % en poids d'autres liants différents de ces polyuréthanes.

## Claims

1. Aqueous dispersions of polyurethanes with an acid value of 5 to 60 mg KOH/g polyurethane solids, a hydroxyl group content of 0.25 to 6.5% by weight and a urethane group content (expressed as -NH-CO-O-) of 2 to 25% by weight, based on polyurethane solids, **characterized in that** the polyurethanes are reaction products - optionally at least partly neutralized with bases - of
a) 10 to 80% by weight of at least one dimer diol,
b) 10 to 80% by weight of at least one dimer diol carbonate and/or dimer diol ether,
c) 1 to 10% by weight of at least one acid component consisting of i) hydroxycarboxylic acids, ii) aminocarboxylic acids, iii) aminosulfonic acid and iv) hydroxysulfonic acids,
d) 0 to 20% by weight of a low molecular weight component consisting of compounds containing at least two hydroxyl and/or amino groups with a molecular weight in the range from 60 to 300,
e) 0 to 20% by weight of at least one hydrophilic mono- or polyhydric alcohol containing ethylene oxide units with a molecular weight in the range from 350 to 3,000,
f) 5 to 40% by weight of an isocyanate component,
the percentages mentioned adding up to 100.

2. The use of the aqueous dispersions claimed in claim 1 for the production of water-containing coating compositions based on dispersions in water of binders and crosslinker resins selected from the group consisting of amino resins, optionally hydrophilicized blocked polyisocyanates and optionally hydrophilicized polyisocyanates containing free isocyanate groups.

3. A water-containing coating composition optionally containing typical auxiliaries and additives, **characterized in that** it contains as binder a combination of
A) a polyol component with
B) a crosslinker resin selected from the group consisting of melamine resins, optionally hydrophilicized blocked polyisocyanates and optionally hydrophilicized polyisocyanates containing free isocyanate groups,
25 to 100% by weight of polyol component A) consisting of a hydroxyl-group-containing polyurethane of the type present as a dispersion in water as claimed in claim 1 and 0 to 75% by weight of other binders different from these polyurethanes.
